# EUROPÄISCHE PATENTANMELDUNG

(11) **EP 1 519 255 A2**
(43) Veröffentlichungstag der Anmeldung: **30.03.2005**
(21) Anmeldenummer: 04018519.1
(22) Anmeldetag: 05.08.2004
(51) Int. Cl.: G05B 23/02

(54) **Vorrichtung, Verfahren und Computerprogrammprodukt zum zentralen Handhaben einer Mehrzahl von elektromechanischen Sytemen**

(30) Priorität: 23.09.2003 CH 16202003
(71) Anmelder: OERLIKON CONTRAVES AG, 8050 Zürich (CH)
(72) Erfinder: Jäger, Helge, 8048 Zürich (CH); Kaushansky, Anatole, Thonhill ON L4J7C9 (CA)
(74) Vertreter: OK pat AG

(57) **Zusammenfassung**

Vorrichtung (30) mit einer Mehrzahl von elektro-mechanischen Systemen (1,2), wobei jedes der elektro-mechanischen Systeme (1,2) mit Mitteln (1.1,1.2,1.3; 2.1,2.2,2.3,2.4) zum Erfassen von Parametern ausgestattet ist, die mit physikalischen und/oder technischen Grössen des jeweiligen elektromechanischen Systems (1,2) korreliert sind. Es ist ein Datenbanksystem in einer Datenverarbeitungseinrichtung (33) vorgesehen, dass zum Übernehmen der Parameter von mindestens einem der elektro-mechanischen Systeme (1,2) zu bewerkstelligen. Weiterhin verwaltet das Datenbanksystem (11,12) die Parameter, und es korreliert die Parameter mit mindestens einer der folgenden Zusatzangaben:
· Angaben über Nutzungsdauer und Nichtnutzungsdauer des entsprechenden elektro-mechanischen Systems, und/oder
· Angaben über Betriebszeit und Nichtbetriebszeit des entsprechenden elektromechanischen Systems, und/oder
· Angaben über Vorkommnisse.
Durch das Korrelieren wird ein Rückschluss auf die Konstitution des entsprechenden elektro-mechanischen Systems ermöglicht.

## Beschreibung

Die vorliegende Erfindung betrifft Vorrichtungen, Verfahren und Computerprogrammprodukte, die dazu dienen eine Mehrzahl von elektro-mechanischen Systemen zu verwalten.

Eine durchgängige Bearbeitung und Steuerung technischer und anwendungsspezifischer Merkmale zur Abschätzung der Lebensdauer, oder der Lebensdauerkosten, eines Produkts bedarf heutzutage trotz der verschiedenen Software-Tools, die es zum Teil gibt, aufwendiger, zum Teil manueller, Schritte. Insbesondere bei elektro-mechanischen Produkten, ist es wichtig, die gesamten Kreislauf von der Fertigung über die Verwendung bis zu Ausfall des Produkts überwachen zu können. Einerseits kann man damit die Sicherheit gleichartiger Produkte in den Griff bekommen und andererseits kann man wichtige Planungsschritte anknüpfen, die es einem zum Beispiel erlauben die Ersatzteilbewirtschaftung, den Reparaturdienst und andere Massnahmen organisieren zu können.

Besonders bei der Planung von Missionen oder in der Angebotsphase eines grösseren Auftrags, ist es von Bedeutung, dass alle notwendigen Daten und Informationen zur Verfügung stehen.

Bisher gibt es kein System oder kein Software-Tool, das es erlaubt die verschiedensten Information in einheitlicher Form zu erfassen und aufzubereiten. Ein Teil der heutigen Systeme besteht aus einer Reihe von Insellösungen, die zum Beispiel auf der einen Seite Information aus der Wartung der Produkte sammeln und die auf der anderen Seite eine Lagerbestand mit Ersatzteilen wiedergeben. Eine Verknüpfung dieser einfachen Systeme ist bisher jedoch nicht vorgesehen, oder nur in einigen wenigen Spezialfällen möglich.

Ein weiterer Nachteil bisheriger Teillösungen wird darin gesehen, dass jegliche Information, die erfasst und gesammelt wird, relativ unbrauchbar ist, wenn Sie nicht unmittelbar in Bezug gebracht wird mit speziellen Vorkommnissen, wie zum Beispiel mit dem Ausfall eines Produkts.

Es gibt bisher keine Lösungen, die eine gesamthafte und einheitliche Erfassung und Handhabung der Informationsflut ermöglichen, die von der Planung über die Fertigung bis zur Auslieferung und dem Einsatz der Produkte anfallen. Da keine solche Lösungen vorhanden sind, gibt es auch keine Möglichkeiten eines automatisierten und vereinfachten Planens und Auswertens.

Es ist mit bisherigen Tools nur bedingt möglich, die Wirksamkeit konstruktiver Massnahmen oder Änderungen an einem Produkt rechnerisch und betriebswirtschaftlich zu erfassen. Auch ist eine Risikoabschätzung häufig nur unter ganz bestimmten und eng umrissenen Grenzen möglich.

Es stellt sich somit die Aufgabe, eine Vorrichtung, ein Verfahren und ein entsprechendes Computerprogrammprodukt bereitzustellen, das erstmals alle diese Punkte universell aufgreift und die Nachteile der bekannten Ansätze entweder reduziert oder ganz vermeidet.

Eine Vorrichtung gemäss Erfindung ist dem Hauptanspruch 1 zu entnehmen und weitere vorteilhafte Ausführungsformen sind in den abhängigen Ansprüchen 2 bis 10 beansprucht.

Ein erfindungsgemässes Verfahren ist dem Hauptanspruch 11 zu entnehmen und weitere vorteilhafte Ausführungsformen sind in den abhängigen Ansprüchen 10 bis 14 beansprucht.

Ein erfindungsgemässes Computerprogrammprodukt ist dem Hauptanspruch 15 zu entnehmen und weitere vorteilhafte Ausführungsformen sind in den abhängigen Ansprüchen 16 bis 18 beansprucht.

Einzelheiten und Vorteile der Erfindung werden im Folgenden anhand von Ausführungsbeispielen und mit Bezug auf die Zeichnung ausführlich beschrieben.
Es zeigen:
- Fig. 1A: eine Mehrzahl von elektro-mechanischen Systemen in einer schematisierten Darstellung, die Bestandteil einer ersten erfindungsgemässen Vorrichtung sind;
- Fig. 1B: eine Datenverarbeitungseinrichtung in einer schematisierten Darstellung, die Bestandteil der ersten erfindungsgemässen Vorrichtung ist;
- Fig. 2: eine zweite erfindungsgemässe Vorrichtung in einer schematisierten Darstellung.

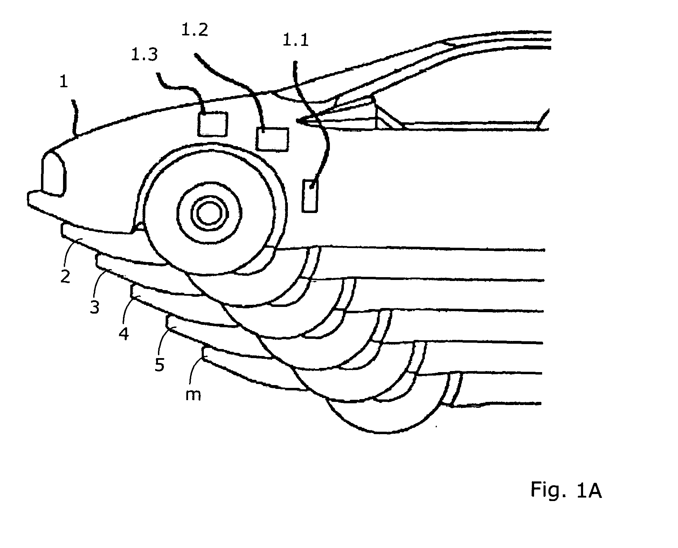

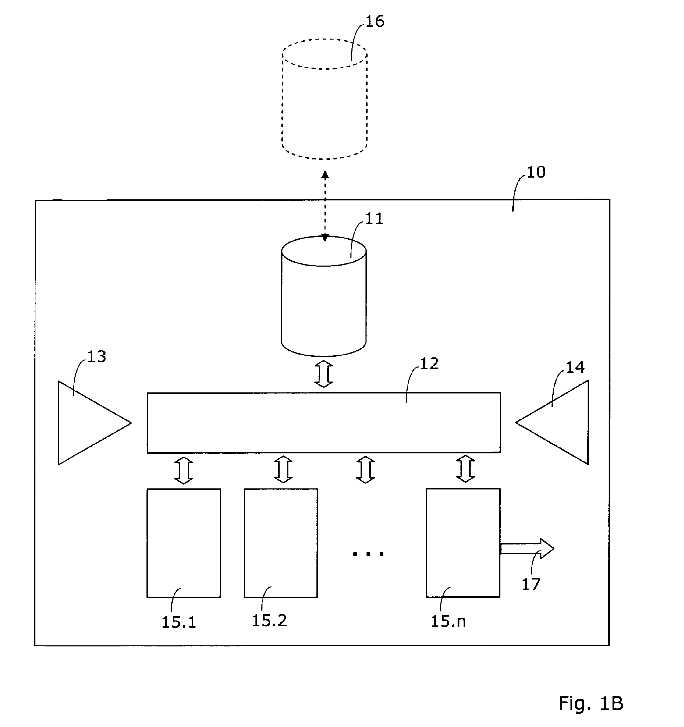

Eine erste erfindungsgemässe Vorrichtung wird im Zusammenhang mit den Figuren 1A und 1B beschrieben. Wie in Fig. 1A schematisch angedeutet, umfasst die Vorrichtung eine Mehrzahl von m elektro-mechanischen Systemen 1, 2, 3 bis m, wobei jedes der elektro-mechanischen Systeme 1 bis m mit Mitteln 1.1, 1.2, 1.3 zum Erfassen von Parametern ausgestattet ist, die mit physikalischen und/oder technischen Grössen des jeweiligen elektro-mechanischen Systems 1 korreliert sind. Zusätzlich umfasst die Vorrichtung ein Datenbanksystem 11, 12 in einer Datenverarbeitungseinrichtung 10. Das Datenbanksystem 11, 12 und die Datenverarbeitungseinrichtung 10 sind so ausgelegt, dass sie Parameter von mindestens einem der elektro-mechanischen Systeme 1 bis m zu übernehmen in der Lage sind. Wie in Fig. 1B angedeutet, weist die Datenverarbeitungseinrichtung 10 eine entsprechende Schnittstelle 14 auf. In dem in Fig. 1B gezeigten Beispiel umfasst die Datenverarbeitungseinrichtung 10 ein Anwendungsprogramm 12, dass wie eine Art Betriebssystem die wichtigsten Aufgaben des Datenbanksystems steuert und ausführt. Dazu gehören unter anderem die Übernahme von Parametern über die Schnittstelle 14, die Kommunikation (Daten und/oder Befehlsaustausch) mit Softwaremodulen 15.1 bis 15.n, sowie das Ablegen und Holen von Daten aus einem Datenspeicher 11. Zusätzlich zu der Schnittstelle 14, weist die Datenverarbeitungseinrichtung 10 eine Schnittstelle 13 auf, die dazu ausgelegt ist sogenannte Zusatzangaben in die Datenverarbeitungseinrichtung 10 zu übernehmen oder einzugeben. Unter Zusatzangaben werden im Rahmen dieser Patentanmeldung die folgenden Informationen verstanden:
- Angaben über Nutzungsdauer und Nichtnutzungsdauer des entsprechenden elektro-mechanischen Systems, und/oder
- Angaben über Betriebszeit und Nichtbetriebszeit des entsprechenden elektro-mechanischen Systems, und/oder
- Angaben über Vorkommnisse, wobei es sich vorzugsweise um Angaben über Ausfälle handelt, die sich ereignet haben.
Diese Aufzählung ist nicht abschliessend.

Weiterhin führt das Anwendungsprogramm 12 die folgenden Funktionen aus:
- Verwalten der Parameter,
- Korrelieren der Parameter mit mindestens einer der Zusatzangaben, wobei das Korrelieren einen Rückschluss auf die Konstitution des entsprechenden elektro-mechanischen Systems 1 bis m zulässt.

Ein Softwaremodul im Sinne der vorliegenden Erfindung ist eine Software (bzw. ein Softwarepaket), die dazu ausgelegt ist gewisse Vorgänge zu steuern, wenn sie durch die Datenverarbeitungseinrichtung 10 ausgeführt wird. Ein Softwaremodul kann autark sein, d.h. es ist wie ein "Executable" anzusehen, dass nur zum Austausch von Daten oder Befehlen mit dem Anwendungsprogramm 12 in Verbindung tritt. Ein Softwaremodul kann aber auch eine Erweiterung des Anwendungsprogramms 12 sein, um dem Anwendungsprogramm 12 eine oder mehrere zusätzliche Funktionen zu geben.

Im Folgenden werden weitere Begriffe, die in der Beschreibung und den Ansprüchen Verwendung finden, erläutert.

Unter elektro-mechanischen Systemen versteht man im weitesten Sinne alles, was einen mechanischen Aufbau oder sich mechanisch bewegende Teile und elektrische/elektronische Komponenten hat, wie zum Beispiel: Fahrzeuge (zum Beispiel Panzer, um ein Beispiel aus dem militärischen Bereich zu geben), Schiffe, Flugzeuge, Waffen (zum Beispiel Flakgeschütze), Geräte (zum Beispiel Konsumgüter), Maschinen (zum Beispiel eine Bearbeitungsmaschine), Anlagen (zum Beispiel Fertigungsanlagen), Datenverarbeitungssysteme (zum Beispiel Computer), usw.

Der Begriff Parameter wird verwendet, um Werte, Grössen oder Zustände zu beschreiben, die mit physikalischen und/oder technischen Grössen des jeweiligen elektro-mechanischen Systems direkt oder indirekt korreliert sind. Im Folgenden sind einige Beispiele für Parameter gegeben, wobei diese Auflistung nicht abschliessend ist:
- Betriebsstunden,
- Drehzahl,
- Geschwindigkeit,
- Anzahl der Beschleunigungszyklen,
- Anzahl Bremsvorgänge,
- Anzahl der An- und/oder Abschaltungen,
- Anzahl gefertigter Teile,
- Anzahl abgegebener Schüsse,
- Anzahl von Fehlern oder Ausfällen,
- Stromverbrauch,
- Treibstoffverbrauch.

Die Parameter werden vorzugsweise in einer genormten Form zur Verfügung gestellt, um die Übertragbarkeit an die Datenverarbeitungseinrichtung 10 zu erleichtern.

Die elektro-mechanischen System sind vorzugsweise mit speziellen Mitteln ausgestattet, die ein Erfassen oder Aufnehmen der Parameter zulassen. Im einfachsten Fall kann es sich bei den Mitteln um Zähler handeln, die zum Beispiel die Betriebsstunden oder den Stromverbrauch "zählen". Es kann sich bei den Mitteln aber auch um Sensoren, Detektoren oder andere Einrichtungen handeln, die dazu ausgelegt sind einen Zustand zu überwachen und zu erfassen oder aufzuzeichnen. Als Beispiel sei ein Temperatursensor genannt, der entweder kontinuierlich oder in gewissen Zeitabständen eine Temperatur aufzeichnet. In Fig. 1A sind drei Mittel 1.1, 1.2, 1.3 zum Erfassen von Parametern gezeigt, die alle im Bereich des Motorraumes eines Fahrzeugs 1 angeordnet sind.

Bei der Datenverarbeitungseinrichtung 10 handelt es sich zum Beispiel um einen Computer oder Server. Es kann aber auch ein Verbund von mehreren Computern, die zum Beispiel über ein Netzwerk verbunden sind, als Datenverarbeitungseinrichtung 10 betrachtet werden.

Die Schnittstellen 13, 14 können in verschiedenster Art und Weise ausgeführt sein. Im einfachsten Fall wird als Schnittstelle eine Eingabemaske vorgesehen, deren Eingabefelder ausgefüllt werden. Vorteilhaft ist jedoch eine Schnittstelle, die eine automatisiertes Übertragen der Parameter und Übernehmen der Zusatzinformation ermöglicht. Es kann sich zum Beispiel um Kommunikationsschnittstellen handeln, die vorzugsweise gemäss eines Standardkommunikationsprotokolls ausgelegt sind. Die Schnittstelle 14 kann zum Beispiel auch in Form eines Steckplatzes oder eines Steckers ausgebildet sein, um das entsprechende elektro-mechanische System anzukoppeln, oder ein Modul aus einem solchen System einzuschieben.

Als Konstitution eines elektro-mechanischen Systems wird die momentane physikalisch/technische Beschaffenheit bzw. Verfassung des Systems bezeichnet.

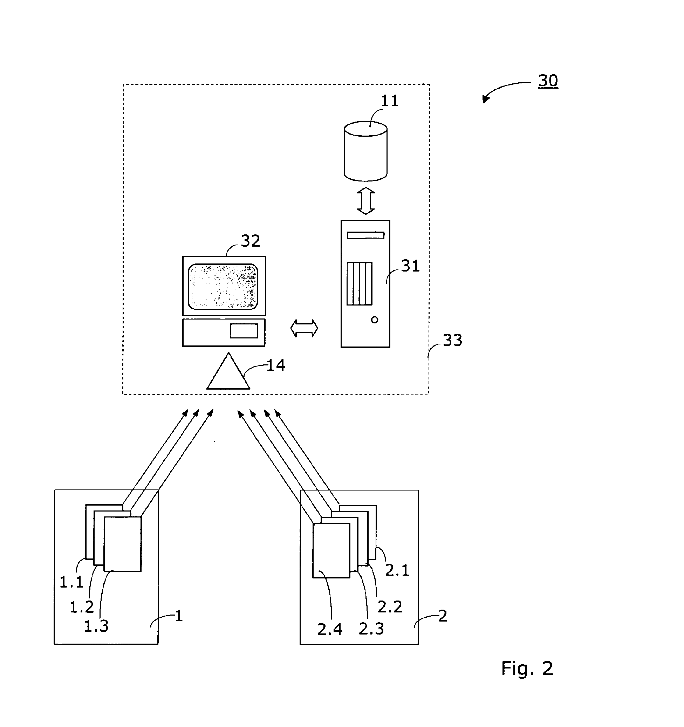

Eine zweite erfindungsgemässe Vorrichtung 30 wird im Zusammenhang mit der Fig. 2 beschrieben. Gleiche Elemente, oder Elemente die im Wesentlichen gleichartig sind, sind in den Figuren mit den gleichen Bezugszeichen bezeichnet. Wie in Fig. 2 schematisch angedeutet, umfasst die Vorrichtung 30 zwei elektro-mechanische Systeme 1 und 2, wobei jedes der beiden elektro-mechanischen Systeme 1 und 2 mit Mitteln zum Erfassen von Parametern ausgestattet ist. Das erste System 1 hat drei Mittel 1.1, 1.2, 1.3 zum Erfassen von Parametern und das zweite System 2 hat vier Mittel 2.1, 2.2, 2.3, 2.4 zum Erfassen von Parametern. Die Parameter sind, wie auch im ersten Ausführungsbeispiel, mit physikalischen und/oder technischen Grössen des jeweiligen elektro-mechanischen Systems 1 oder 2 korreliert. Weiterhin umfasst die Vorrichtung 30 ein Datenbanksystem in einer Datenverarbeitungseinrichtung 33. Im gezeigten Beispiel ist das Datenbanksystem auf einem Arbeitsplatzrechner 32 (Client) und einem Server 31 installiert. Es handelt sich um eine Client-Server Ausführung der Erfindung. Das Datenbanksystem kann die Parameter übernehmen, indem sie von den elektro-mechanischen Systemen 1 und 2 über eine Schnittstelle 14 in den Rechner 32 eingespeist werden, wie schematisch durch die Schar an Pfeilen dargestellt. Das Datenbanksystem ist zum Verwalten der Parameter und zum Korrelieren dieser Parameter mit mindestens einer Zusatzangabe ausgelegt. Die Zusatzangaben können in einem Speicher 11 gespeichert sein. Durch das Korrelieren kann das Datenbanksystem einen Rückschluss auf die Konstitution des entsprechenden elektro-mechanischen Systems 1 oder 2 ziehen.

Die erfindungsgemässe Vorrichtung erlaubt eine durchgängige Bearbeitung und Steuerung der technisch and anwendungsspezifischen Merkmale zur Abschätzung der Lebensdauer von elektro-mechanischen Systemen, respektive der Lebensdauerkosten dieser Systeme. Ausserdem kann mittels der Erfindung die Wirksamkeit konstruktiver Massnahmen oder die Wirksamkeit von Änderungen an elektro-mechanischen Systemen ermittelt werden.

Es kann zum Beispiel eine Auswertung der Parameter und Zusatzangaben erfolgen, um automatisch Aussagen über Betriebs- und Ersatzteilkosten machen zu können. Damit kann die Ersatzteilbewirtschaftung, die Lagerhaltung und die Zulieferung von Halbfertigprodukten effizienter organisiert werden. Gemäss Erfindung können verschiedene Algorithmen zur Bestimmung der notwendigen Ersatzteilmengen zur Anwendung kommen. Es kann auch eine Routine ausgeführt werden, die Angaben zur momentan vorhandenen Versorgungssicherheit gibt.

Das Datenbanksystem 11, 12 gemäss Erfindung, oder ein erfindungsgemässes Softwaremodul 15.3 zur Verwendung mit dem Datenbanksystem 11, 12, kann automatisch auswählbare Filter aufweisen, die je nach den übertragenen Parametern und Zusatzinformation entscheiden, ob es wirtschaftlich rentabel ist ein defektes elektro-mechanisches System, oder eine Komponente eine solchen Systems, zu reparieren, oder ob es wirtschaftlich gesehen günstiger ist, das defekte elektro-mechanische System, oder die defekte Komponente auszutauschen. Das Datenbanksystem 11, 12, oder das entsprechende Softwaremodul 15.3 trifft derartige Entscheidungen anhand von Regeln, die vorgebbar sind. Unter anderem können dabei die folgenden Eingangsgrössen berücksichtigt werden: Verfügbarkeit adäquater Ersatzteile oder Komponenten; Fahrt- oder Lieferweg; Verfügbarkeit von qualifiziertem Servicepersonal das zur Reparatur erforderlich ist; vertragliche Serviceverpflichtungen; Ausfallsentschädigungen; Kundenanforderungen, etc.

Das Datenbanksystem 11, 12 oder das entsprechende Softwaremodul 15.n kann in einer vorteilhaften Ausführungsform der Erfindung eine Ausgabevorrichtung 17 aufweisen, die es ermöglicht in speziellen Situationen eine Ausgabe zu tätigen, um den Eingriff oder die Entscheidung eines Spezialisten auszulösen. Der Spezialist kann zum Bespiel Entscheidungen treffen, bei denen übergeordnete Dinge (zum Beispiel politisch, strategische Aspekte) Berücksichtigung finden, die im Datenbanksystem 11, 12 nicht in Form von Zusatzangaben verfügbar waren.

In einer weiteren Ausführungsform der Erfindung ist das Datenbanksystem 11, 12 so ausgelegt, oder es ist ein entsprechendes Softwaremodul 15.2 vorgesehen, dass eine automatische Konfigurationskontrolle ausgeführt werden kann. Eine automatische Konfigurationskontrolle läuft gemäss Erfindung wie folgt ab. Es werden von einem elektro-mechanischen System 1, dessen Konfiguration zu überprüfen ist, Parameter an das Datenbanksystem 11, 12 übertragen. Zusätzlich kann das Datenbanksystem 11, 12 über weitere Information (Zusatzangaben genannt), wie zum Beispiel Bautyp des elektro-mechanischen Systems 1, verfügen. Das Datenbanksystem 11, 12 oder das entsprechende Softwaremodul 15.2 korreliert diese Parameter mit mindestens einer der Zusatzangaben, um zu ermitteln, ob die gegenwärtige Konfiguration der Hardund oder Software im elektro-mechanischen System 1 den Vorgaben entspricht. Die Vorgaben können zum Beispiel auch in Form von Zusatzangaben in dem Speicher 11 vorhanden sein. Im Rahmen der automatischen Konfigurationskontrolle kann zum Beispiel erkannt werden, ob das elektro-mechanische System 1 richtig, d.h. den Vorgaben entsprechend, bestückt ist.

Eine solche automatische Konfigurationskontrolle kann in Vorrichtungen von besonderer oder gar lebenswichtiger Bedeutung sein, bei denen die Betriebssicherheit ein wichtiger Punkt ist. Bei Fahrzeugen zum Beispiel, die häufig im Einsatz sind und eventuell nicht fachmännisch gewartet werden (können), ist eine solche Konfigurationskontrolle sehr wichtig. Wird eine Fehlkonfiguration erkannt, kann zum Beispiel ein Signal ausgelöst werden, um das elektro-mechanische System (zum Beispiel eine Fertigungsstrasse, ein Fahroder Flugzeug, ein Geschütz) stillzulegen.

Die Erfindung kann so ausgebaut werden, dass eine Konfigurationskontrolle einer ganzen Flotte an elektro-mechanischen Systemen möglich ist.

Das Datenbanksystem gemäss Erfindung, oder ein erfindungsgemässes Softwaremodul zur Verwendung mit dem Datenbanksystem kann so ausgeführt sein, dass es möglich ist eine Kenngrösse zu ermitteln, die als Missionszuverlässigkeit bezeichnet wird. Die Missionszuverlässigkeit ist eine wichtige Grösse bei der Planung von Missionen oder Aufträgen. Wenn bekannt ist, dass permanent zehn elektro-mechanische Systeme im Dauereinsatz sein müssen, um eine Mission erfolgreich abzuschliessen, so ist es wichtig bereits in der Planungsphase zu wissen, wie viele Systeme insgesamt auf die Mission geschickt werden müssen. Weiterhin ist es von Bedeutung, die Ersatzteilbewirtschaftung entsprechend anzupassen, um rechtzeitig Ersatzteile liefern zu können. Die Missionszuverlässigkeit berücksichtigt unter anderem die folgenden Angaben: gegenwärtige Konstitution der Systeme, die im Rahmen der Mission zum Einsatz kommen werden, Ausfallrate der Systeme, Zuverlässigkeit, Zeitdauer der Mission, Umgebungsbedingungen (Klima, etc.), mechanischer bzw. elektrischer Stress, etc.

Vorzugsweise handelt es sich bei dem Datenbanksystem 11, 12 um ein Open-Source Datenbanksystem. Besonders geeignet ist eine SQL-Datenbank 11. Weiter vorzugsweise handelt es sich um ein Client-Server Datenbanksystem 11, 12. Damit ist man im Wesentlichen unabhängig von Software-Releases und derartige Systeme sind sehr stabil.

Vorzugsweise weist das Datenbanksystem 11, 12 normierte Schnittstellen 14 auf, um eine Übernahme der Parameter von den elektro-mechanischen Systemen zu ermöglichen.

Das Datenbanksystem 11, 12 kann optional auch so ausgelegt sein, dass es als logistisches und/oder technisches Planungstool einsetzbar ist. Damit können zum Beispiel logistische Abläufe zuverlässig geplant und dokumentiert werden. Ausserdem kann in der Angebotsphase die Preisgestaltung entsprechend angepasst werden. Wird das Datenbanksystem 11, 12 als technisches Planungstool eingesetzt, so kann zum Beispiel anhand eines technischen Anforderungsprofils die richtige Hard- und/oder Software-Konfiguration ermittelt werden.

Das Datenbanksystem 11, 12 oder ein entsprechendes Softwaremodul kann in einer vorteilhaften Ausführungsform der Erfindung
- eine automatische Zuverlässigkeitsanalyse einer Schar von elektro-mechanischen Systemen vornehmen, die sich im Einsatz befinden, und/oder
- eine Materialhaltbarkeitsanalyse vornehmen.
Damit können Ausfälle vorhergesagt und eventuell - bei rechtzeitigem Eingriff - vermieden werden.

In einer weiteren Ausführungsform der Erfindung ist die Vorrichtung als Regelschleife aufgebaut, die als Rückmeldung Parameter von den elektro-mechanischen Systemen übernimmt, diese Parameter verarbeitet und auswertet, um dann eine Regelgrösse bereit zu stellen. Die Regelgrösse kann zum Beispiel unmittelbar in einen Fertigungsprozess eingreifen, um dort in der Fertigung Änderungen vorzunehmen. Zahlreiche industriell gefertigte Produkte werden nach der Fertigung einem eingehenden Test unterzogen. Dazu werden die elektro-mechanischen Systeme zum Beispiel unter verschiedenen Lastbedingungen in Betrieb genommen. Während diesem Test können gemäss Erfindung Parameter aufgenommen und an das Datenbanksystem übermittelt werden. Dort werden Probleme erkannt und gegebenenfalls Gegenmassnahmen eingeleitet. Stellt zum Beispiel das Datenbanksystem fest, dass mehrere Produkte aus ein und derselben Fertigungsserie Probleme zeigen, so werden diese Produkte nicht freigegeben und die Fertigung weiterer baugleicher Produkte entweder unterbrochen, oder umgestellt.

Eine weitere Ausführungsform der Erfindung zeichnet sich dadurch aus, dass ein Softwaremodul zum Einsatz kommt, das anzeigt, mit welchen Hard- und/oder Software Bauteilen ein elektro-mechanisches System im Moment ausgestattet ist. Das Softwaremodul generiert eine Darstellung auf einem Bildschirm, der zu entnehmen ist, bei welchen der Bauteile es sich Originalbauteile handelt und welche der Bauteile Austauschbauteile sind. Zusätzlich kann das Softwaremodul visualisieren, ob ein Bauteil bisher fehlerfrei (ausfallfrei) gearbeitet hat. Es ist fernerhin auch möglich, mit dem Softwaremodul sichtbar zu machen, ob ein Bauteil eingesetzt wurde, dass nicht der Basiskonfiguration des Systems entspricht.

Bei allen genannten Ausführungsformen ist es wesentlich, dass die Parameter mit einer Zeitgrösse oder der Zeit in Verbindung gesetzt werden. Diese Zeitgrösse oder die Zeit wird als Zusatzangabe bezeichnet. Erst durch Korrelation der Parameter mit einer solchen Zeitgrösse oder der Zeit, kann eine Aussage über die Konstitution im weitesten Sinne gemacht werden. Weiterhin ist wichtig, dass eine reine Angabe von zum Beispiel Betriebsstunden typischerweise nicht ausreicht. Die Anzahl der Betriebsstunden wird gemäss Erfindung stets in einen Gesamtzusammenhang gestellt. Erst dieser Gesamtzusammenhang erlaubt es wertvolle Schlüsse zu ziehen, wie an dem folgenden einfachen Beispiel erläutert wird.

Die Parameter einer Fertigungsanlage zeigen, dass die Anlage insgesamt 100 Betriebsstunden in Betrieb war. Es sind zwei gravierende Ausfälle der Anlage verzeichnet worden. Gemäss Erfindung wird nun zusätzlich die Information geliefert, dass die Anlage immer nur für einen kurzen Moment eingeschaltet war, bevor sie wieder abgestellt wurde. Die Parameter zeigen nach Auswertung durch das Datenbanksystem, dass insgesamt die Anlage 500 mal angeschaltet wurde. Das Ein- und Ausschalten einer Anlage kann bekannterweise besondere Probleme hervorrufen. Die Systeme der Anlage werden durch häufiges Ein- und Ausschalten stärker belastet als im eingeschwungenen Zustand. Es kann in einem solchen Fall zum Beispiel entschieden werden, die System der Anlage, die beim Ein- und Ausschalten besonders belastet sind anders zu dimensionieren. Es kann aber auch eine Schlussfolgerung sein, dass der Betreiber der Anlage instruiert wird, die Anlage durchlaufen zu lassen.

Als ein weiteres wesentliches Bestandteil der Erfindung wird die Datenreduktion angesehen, die von Bedeutung ist, wenn die erfindungsgemässe Vorrichtung eine grosse Zahl an elektro-mechanischen Systemen zu verwalten und betreuen hat. Die Datenreduktion wird gemäss Erfindung dadurch erzielt, dass Eingabefilter vorgesehen sind, die nur die für ein jeweiliges System relevanten Parameter herausfiltern. Damit kann die Grösse der Matrix, die sich aus allen Parametern zusammensetzt, erheblich reduziert werden. Ausserdem gibt die Erfindung anhand von Regeln oder anderen Arten von Verknüpfungen Wege für das Verfahren des Korrelierens vor. Damit kann die Gesamtzahl an Korrelationen, die durchgeführt werden müssen, drastisch reduziert werden. Dies wird an einem einfachen Beispiel erläutert.

Vereinfacht ausgedrückt, macht es keinen Sinn, die Anzahl an Stanzbewegungen, die eine Stanzmaschine ausgeführt hat mit der Umdrehungszahl eines Lüfters, der die NC-Steuerung der Stanzmaschine kühlt, in eine Korrelation zu bringen. Im Rahmen der Datenreduktion unterdrückt die Erfindung eine solche offensichtlich sinnlose Verknüpfung.

Durch die Verwendung der Eingabefilter und durch die Reduktion auf einige wenige sinnvolle Korrelationen, kann der Datenumfang und vor allem der Rechenaufwand erheblich reduziert werden. Nur so ist die anfallende Datenmenge überhaupt handhabbar in einer Datenverarbeitungseinrichtung.

## Patentansprüche

1. Vorrichtung mit
- einer Mehrzahl von elektro-mechanischen Systemen, wobei jedes der elektro-mechanischen Systeme mit Mitteln zum Erfassen von Parametern ausgestattet ist, die mit physikalischen und/oder technischen Grössen des jeweiligen elektro-mechanischen Systems korreliert sind,
- einem Datenbanksystem (11, 12) in einer Datenverarbeitungseinrichtung (10)
○ zum Übernehmen der Parameter von mindestens einem der elektro-mechanischen Systeme,
○ zum Verwalten der Parameter, und
○ zum Korrelieren dieser Parameter mit mindestens einer der folgenden Zusatzangaben:
■ Angaben über Nutzungsdauer und Nichtnutzungsdauer des entsprechenden elektro-mechanischen Systems, und/oder
■ Angaben über Betriebszeit und Nichtbetriebszeit des entsprechenden elektro-mechanischen Systems, und/oder
■ Angaben über Vorkommnisse,
wobei das Korrelieren einen Rückschluss auf die Konstitution des entsprechenden elektro-mechanischen Systems zulässt.

2. Vorrichtung nach Anspruch 1, wobei das Datenbanksystem (11, 12)
- Datenfelder mit Soll-Parametern vorsieht, die nach dem Übernehmen der Parameter zum Vergleich und/oder zur Synchronisierung heranziehbar sind, und/oder
- Datenfelder zum Erfassen von Installations- und Wartungsarbeiten vorsieht, die an einem der elektro-mechanischen Systeme vorgenommen wurden.

3. Vorrichtung nach Anspruch 1 oder 2, wobei das Datenbanksystem (11, 12) oder ein Softwaremodul (15.3) zur Verwendung mit dem Datenbanksystem (11, 12), automatisch auswählbare Filter aufweist, die je nach den übertragenen Parametern und Zusatzinformation entscheiden,
- ob es wirtschaftlich rentabel ist ein defektes elektro-mechanisches System, oder eine Komponente eine solchen Systems, zu reparieren, oder
- ob es wirtschaftlich gesehen günstiger ist, das defekte elektro-mechanische System, oder die defekte Komponente auszutauschen.

4. Vorrichtung nach Anspruch 1 oder 2, wobei das Datenbanksystem (11, 12) mit Datenverarbeitungseinrichtung (10) ein Softwaremodul (15.1) zur Auswertung der Parameter und Zusatzangaben unter normalisierten Bedingungen umfasst.

5. Vorrichtung nach Anspruch 1 oder 2, wobei es sich bei den Mitteln zum Erfassen um
- einen Zähler zum Bestimmen von Lastzyklen, und/oder
- einen Zähler zum Bestimmen von sich wiederholenden Zuständen, und/oder
- einen Detektor zum Aufnehmen oder Erkennen physikalischer oder technischer Grössen, und/oder
- einen Sensor zum Aufnehmen oder Erkennen physikalischer oder technischer Grössen
handelt.

6. Vorrichtung nach Anspruch 1, 2 oder 5, wobei die elektro-mechanischen Systeme Mittel zum automatischen Erkennen der gegenwärtigen Systemkonfiguration aufweisen und wobei Information zur gegenwärtigen Systemkonfiguration an das Datenbanksystem (11, 12) mit Datenverarbeitungseinrichtung (10) übertragbar ist.

7. Vorrichtung nach Anspruch 1 oder 2, wobei die Datenverarbeitungseinrichtung (10) mit Datenbanksystem (11, 12) ein Softwaremodul (15.2) zum automatischen Erkennen der gegenwärtigen Systemkonfiguration eines oder mehrerer der elektro-mechanischen Systeme umfasst.

8. Vorrichtung nach Anspruch 1 oder 2, wobei die Datenverarbeitungseinrichtung (10) mit Datenbanksystem (11, 12) dazu ausgelegt ist eine durchgängige Bearbeitung und Steuerung der technisch und anwendungsspezifischen Merkmale zur Abschätzung der Lebensdauer von elektro-mechanischen Systemen, oder zur Abschätzung der Lebensdauerkosten dieser elektro-mechanischen Systeme durchzuführen.

9. Vorrichtung nach Anspruch 1 oder 2, wobei die Datenverarbeitungseinrichtung (10) mit Datenbanksystem (11, 12) dazu ausgelegt ist durch eine Auswertung der Parameter und Zusatzangaben automatisch
- Aussagen über Betriebs- und Ersatzteilkosten, oder
- Angaben zur momentan vorhandenen Versorgungssicherheit
machen zu können.

10. Vorrichtung nach Anspruch 1 oder 2, wobei die Datenverarbeitungseinrichtung (10) mit Datenbanksystem (11, 12), oder ein erfindungsgemässes Softwaremodul zur Verwendung mit dem Datenbanksystem (11, 12), so ausgeführt ist, dass es möglich ist die Missionszuverlässigkeit zu ermitteln.

11. Verfahren zum zentralen Handhaben einer Mehrzahl von elektro-mechanischen Systemen mittels eines Datenbanksystems (11, 12) in einer Datenverarbeitungseinrichtung (10), wobei jedes der elektro-mechanischen Systeme mit Mitteln zum Erfassen von Parametern ausgestattet ist, die mit physikalischen und/oder technischen Grössen des jeweiligen elektro-mechanischen Systems korreliert sind, wobei das Datenbanksystem (11, 12) die folgenden Schritte ausführt:
○ Übernehmen der Parameter von mindestens einem der elektro-mechanischen Systeme,
○ Bereitstellen mindesten einer der folgenden Zusatzangaben:
■ Angaben über Nutzungsdauer und Nichtnutzungsdauer des entsprechenden elektro-mechanischen Systems, und/oder
■ Angaben über Betriebszeit und Nichtbetriebszeit des entsprechenden elektro-mechanischen Systems, und/oder
■ Angaben über Vorkommnisse,
○ Korrelieren dieser Parameter mit mindestens einer der Zusatzangaben, wobei das Korrelieren einen Rückschluss auf die Konstitution des entsprechenden elektro-mechanischen Systems zulässt.

12. Verfahren nach Anspruch 12, wobei bei dem Übernehmen der Parameter Filter und/oder Regeln zur Anwendung kommen, um eine Datenreduktion zu erzielen.

13. Verfahren nach Anspruch 12, wobei mindestens einer der folgenden Schritte ausgeführt wird:
- Vergleichen der Parameter mit vorgegebenen Soll-Parametern,
- Synchronisieren der Parameter mit vorgegebenen Soll-Parametern,
- Erfassen von Installations- und Wartungsarbeiten, die an einem der elektro-mechanischen Systeme vorgenommen wurden,
- Anwenden von automatischen Filtern, um, je nach den übertragenen Parametern und Zusatzinformation, zu entscheiden,
- ob es wirtschaftlich rentabel ist ein defektes elektro-mechanisches System, oder eine Komponente eine solchen Systems, zu reparieren, oder
- ob es wirtschaftlich gesehen günstiger ist, das defekte elektro-mechanische System, oder die defekte Komponente auszutauschen.

14. Verfahren nach Anspruch 12, wobei eine automatische Auswertung der Parameter und Zusatzangaben durchgeführt wird, um
- Aussagen über Betriebs- und Ersatzteilkosten, oder
- Angaben zur momentan vorhandenen Versorgungssicherheit, oder
- die Missionszuverlässigkeit
machen zu können.

15. Computerprogrammprodukt, das dazu ausgelegt ist, die folgenden Schritte auszuführen oder deren Ausführung hervorzurufen, wenn es in einer Datenverarbeitungseinrichtung (10) ausgeführt wird:
○ Übernehmen von Parametern von mindestens einem von mehreren elektro-mechanischen Systemen, wobei jedes der elektro-mechanischen Systeme mit Mitteln zum Erfassen von Parametern ausgestattet ist, die mit physikalischen und/oder technischen Grössen des jeweiligen elektro-mechanischen Systems korreliert sind,
○ Bereitstellen mindesten einer der folgenden Zusatzangaben:
■ Angaben über Nutzungsdauer und Nichtnutzungsdauer des entsprechenden elektro-mechanischen Systems, und/oder
■ Angaben über Betriebszeit und Nichtbetriebszeit des entsprechenden elektro-mechanischen Systems, und/oder
■ Angaben über Vorkommnisse,
○ Korrelieren dieser Parameter mit mindestens einer der Zusatzangaben, wobei das Korrelieren einen Rückschluss auf die Konstitution des entsprechenden elektro-mechanischen Systems zulässt.

16. Computerprogrammprodukt nach Anspruch 15, das so programmiert ist, dass bei dem Übernehmen der Parameter Filter und/oder Regeln zur Anwendung kommen, um eine Datenreduktion zu erzielen.

17. Computerprogrammprodukt nach Anspruch 15, das so programmiert ist, dass mindestens einer der folgenden Schritte ausführbar ist:
- Vergleichen der Parameter mit vorgegebenen Soll-Parametern,
- Synchronisieren der Parameter mit vorgegebenen Soll-Parametern,
- Erfassen von Installations- und Wartungsarbeiten, die an einem der elektro-mechanischen Systeme vorgenommen wurden,
- Anwenden von automatischen Filtern, um, je nach den übertragenen Parametern und Zusatzinformation, zu entscheiden,
- ob es wirtschaftlich rentabel ist ein defektes elektro-mechanisches System, oder eine Komponente eine solchen Systems, zu reparieren, oder
- ob es wirtschaftlich gesehen günstiger ist, das defekte elektro-mechanische System, oder die defekte Komponente auszutauschen.

18. Computerprogrammprodukt nach Anspruch 15, das so programmiert ist, dass eine automatische Auswertung der Parameter und Zusatzangaben durchführbar ist, um
- Aussagen über Betriebs- und Ersatzteilkosten, oder
- Angaben zur momentan vorhandenen Versorgungssicherheit, oder
- die Missionszuverlässigkeit
machen zu können.
